# NEUE EUROPÄISCHE PATENTSCHRIFT

(11) **EP 1 162 061 B2**
(45) Veröffentlichungstag und Bekanntmachung des Hinweises auf die Entscheidung über den Einspruch: **14.03.2018**
(45) Hinweis auf die Patenterteilung: 26.04.2006
(21) Anmeldenummer: 01113738.7
(22) Anmeldetag: 05.06.2001
(51) Int. Cl.: B32B 27/08, B32B 27/34, C09J 177/00, C08L 77/00, F16L 11/04

(54) **Thermoplastische Mehrschichtverbunde**
Thermoplastic laminates
Stratifiés thermoplastiques

(30) Priorität: 09.06.2000 DE 10028558; 07.03.2001 DE 10110964
(43) Veröffentlichungstag der Anmeldung: 12.12.2001
(73) Patentinhaber: EMS-CHEMIE AG, 7013 Domat-Ems (CH)
(72) Erfinder: Flepp, Albert, Dipl.-Ing. HTL, 7013 Domat/Ems (CH); Hoffmann, Michael, Dipl. Kunststofftechniker, 7015 Tamins (CH)
(74) Vertreter: Bremi, Tobias Hans

(56) Entgegenhaltungen:
- EP-A- 0 246 102
- EP-A- 0 428 833
- EP-A- 0 445 706
- EP-A- 1 036 968
- EP-A1- 1 022 314
- EP-A1- 1 243 831
- US-A- 4 407 873
- US-A- 5 706 865
- PUFFR R. ET AL: 'Lactam-Based Polyamides', Bd. BD. 2, 1991, CRC PRESS, BOCA RATON Seiten 10 - 12

## Beschreibung

Die vorliegende Erfindung betrifft thermoplastische Mehrschichtverbunde, insbesondere in Form eines Mehrschichtschlauchs, eines Mehrschichtrohrs, das insbesondere eine Kraftstoffleitung sein kann, oder eines Mehrschichtbehälters, enthaltend mindestens eine Schicht aus einer Formmasse auf Basis von Ethylen/Vinylalkohol-Copolymeren und Schichten aus Formmassen auf Basis von Polyamid, sowie Verfahren zur Herstellung derselben.

Die Erfindung betrifft insbesondere Schlauch- oder Rohrleitungen für gasförmige oder flüssige Medien, die aus mehreren Polymerschichten bestehen und eine verbesserte Barrierewirkung speziell gegenüber Kraftstoffen zeigen. Diese Kraftstoffe können auch alkoholische Komponenten aufweisen. Daher betrifft die erfindungsgemässe Mehrschichtkraftfahrzeugrohrleitung auch die Führung von alkoholischen Medien. Diese Rohrleitungen sollen alkoholfest sein, das bedeutet, dass das Kunststoffrohr bei Führen eines Kraftstoffes, der Alkohol enthält, eine störende Längung nicht erfährt. Eine derartige Leitung soll zur praktisch längungsfreien Führung von Superbenzin mit einem Alkoholgehalt von 5 % und gegebenenfalls mehr, geeignet sein. Der Begriff Alkohol meint im üblichen Sprachgebrauch insbesondere Methylalkohol sowie Ethylalkohol und Mischungen davon mit Wasser, aber auch höherwertige Alkohole. Der Begriff alkoholisches Medium bezeichnet in diesem Zusammenhang nicht nur Kraftstoff mit Alkoholzusatz, sondern auch z. B. Flüssigkeiten einer Scheibenwaschanlage oder Druckmedien eines Bremssystems.

Die bekannten Mehrschicht-Kraftfahrzeug-Rohrleitungen haben schon in den 90er Jahren einem erhöhten Sicherheitsbedürfnis und verschärften Umweltbestimmungen Rechnung getragen als die bislang verwendeten Polyamid-Monorohre. Dies hatte sich auch in den deutschen Normen DIN 73378 sowie DIN 74342 niedergeschlagen.

Bei Anwesenheit von Alkohol im zu führenden Medium werden störende Effekte ausgelöst. Das mit dem Alkohol direkt in Berührung kommende Polyamid wird angequollen, wobei Massvergrösserungen von 5-10 % auftreten. Das Polyamid wird durch den Alkohol aber auch extrahiert, d. h. Monomere, Oligomere, Weichmacher, Stabilisatoren etc. werden herausgelöst und gehen in das Medium Alkohol über. Dadurch verändern sich die Eigenschaften des Rohres. Überdies können bei tieferen Temperaturen die herausgelösten Monomeren und Oligomeren ausfallen und im Benzinsystem (z. B. in Filtern und Düsen) zu Verstopfungen führen. Dieses Phänomen tritt besonders bei Polyamid 11 und Polyamid 12 auf.

Die bekannten Mehrschicht-Kraftfahrzeug-Rohrleitungen hatten sich bewährt, solange das Medium, das sie führten, Alkohol nicht enthält.

Daher könnte man auch daran denken, anstelle des Werkstoffes Polyamid für die Kraftfahrzeugrohrleitungen andere, nämlich alkoholfeste Kunststoffe, einzusetzen. Diese erfüllen jedoch nicht die an medienführende Systeme im Fahrzeugbau gestellten speziellen Anforderungen, die von geringsten Durchlässigkeitswerten der Medien über anspruchsvolle mechanische Beständigkeit mit Kälteschlagfestigkeit von - 40°C bis 100°C bis zu hoher chemischer Beständigkeit bei Einfluss von Streusalz reichen.

Die oben schon angesprochene deutsche DIN 73378 ist in Europa die wichtigste Norm für Rohre aus Polyamiden für Kraftfahrzeuge. Sie spezifiziert für massgeschneiderte Polyamidtypen Dimensionen, Berstdruck in Abhängigkeit von der Temperatur bis 130°C, Schlagfestigkeit bei 23°C und - 40°C, Stabilisierung, Weichmachergehalt, Flexibilität (Zug-E-Modul) und Polyamidcharakteristik mit festgelegten Kurzbezeichnungen. Festzustellen ist, dass schon in dieser sehr alten DIN 73378 für unter der Karosserie verlegte Rohre nur modifizierte Polyamid 12- und Polyamid 11-Materialien zugelassen werden.

Auch in den USA (SAE J 844d und J 1394), Grossbritannien (BS 5409) und Japan (JASO M 301) sind nur modifizierte Polyamid 12- und Polyamid 11-Typen, z. B. für Bremsleitungen und Rohrwendeln zugelassen.

Die Standard-Anforderungen für die heutigen Kraftstoffleitungen (SAE J 2260) sind, wie oben angeführt wurde, vielfältig. Neben den typischen mechanischen und chemischen Polyamidmerkmalen müssen heutige Kraftstoffleitungen aus Umweltschutz- und Gesundheitsgründen höchste Barriereeigenschaften gegenüber flüchtigen organischen Verbindungen aufweisen. Gemäss heutigem Stand der Technik besteht eine Kunststoffkraftstoffleitung für Personenwagen aus mehreren Materialschichten. Dabei werden gezielt Eigenschaften von mehreren Polymeren kombiniert. Dies geschieht im Wege der Coextrusion. Es ist dabei notwendig, dass die einzelnen Schichten, die im direkten Kontakt zueinander stehen, verträglich sind, um somit eine gute Haftung während der ganzen Lebensdauer des Bauteils zu erreichen. Zwischen nicht verträglichen Polymeren ist deshalb der Einsatz eines Haftvermittlers notwendig.

Polyamide, insbesondere Polyamid 11 (PA 11) oder Polyamid 12 (PA 12), sind wegen der guten mechanischen und chemischen Eigenschaften für diese Anwendungen bevorzugt als Material für Rohraussenschichten im Einsatz. Obwohl Polyamide für sich alleine gute mechanische Eigenschaften, insbesondere gute Zähigkeit aufweisen, genügt die Sperrwirkung gegenüber alkoholischen Kraftstoffen nicht. Insbesondere polare Substanzen können leicht durch Polyamide migrieren. Dies ist beispielsweise bei Kraftstoffleitungen, in denen alkoholhaltiger Kraftstoff geführt wird, äusserst nachteilig. Dies ist im Hinblick auf die in den letzten Jahren aufkommenden Umweltschutz- und Sicherheitsüberlegungen unerwünscht.

Es wurden deshalb Entwicklungen durchgeführt, um Mehrschichtrohre mit verbesserten Barriereschichten herzustellen. Als Barriereschichten kommen heutzutage üblicherweise Fluorpolymere wie PVDF und ETFE als Barriere zur Anwendung. Diese Materialien sind jedoch teuer. Auch beim Einsatz von sehr dünnen Schichten aus diesem Material entstehen Materialkosten für das Gesamtrohr, die 40-60 % höher liegen als bei einem Einschichtrohr aus PA 11 bzw. PA 12. Beim Einsatz von Fluorpolymeren müssen zudem bei der Verarbeitung sowie auch bei der Beseitigung nach dem Einsatz des Produktes für Mensch und Umwelt zusätzliche Sicherheitsvorkehrungen getroffen werden.

Ethylen/Vinylalkohol-Copolymere, abgekürzt auch EVAL genannt, im englischen Sprachraum auch als EVOH bezeichnet, sind als Barrierematerial gegen unpolare und polare Lösungsmittel bekannt und werden als Barriereschichten für Mehrschicht-Kraftfahrzeugleitungen vorgesehen (vgl. DE 35 10 395 A1, DE 38 27 092 C1 und EP 0 428 834 A2). Allerdings werden Mehrschicht-Kraftstoffleitungen mit Ethylen/Vinylalkohol-Copolymeren als Barriereschichten in der Praxis kaum eingesetzt, da die Verfügbarkeit von EVOH noch vor wenigen Jahren sehr eingeschränkt war. Damit EVOH seine hervorragenden Barriereeigenschaften beibehält, muss es vor Feuchtigkeit geschützt werden. Deshalb wird es bevorzugt als Zwischenschicht und nicht in direktem Kontakt mit dem Fluid eingesetzt. Weiterhin ist bekannt, dass EVOH in reiner Form nur in geringen Schichtdicken verwendet werden kann. Ethylen/Vinylalkohol-Copolymere mit den geforderten Barriereeigenschaften sind nämlich bekannt als ausserordentlich brüchige Polymere mit nur geringer Reissdehnung.

Gemäss Kunststoff-Taschenbuch, Saechtling, 26. Ausgabe, enthalten typische EVAL-Barrieretypen einen VAL-Gehalt von 53 bis 68 Gew.-%. Demzufolge besitzen diese Materialien eine erhebliche Feuchtigkeitsaufnahmefähigkeit. Es wird beschrieben, dass diese EVAL-Typen bei einem Wassergehalt von 3 bis 8 % die Sperrwirkung verlieren. Saechtling empfiehlt deshalb EVAL als Mehrschichtfolie zwischen PE, PP und PA oder PET einzusetzen.

Es wäre daher wünschenswert, wenn es gelänge, geeignete Polymere zu finden, die gleichzeitig zu EVOH, als auch zu Polyamiden wie PA 11 und PA 12 eines Mehrschichtverbunds eine gute und beständige Haftung ergeben. Die EVOH-Zwischenschicht hat dabei, wie schon in EP 0 428 833 B1 beschrieben, neben ihrer Hauptfunktion als Barriereschicht gegenüber dem Medium (z. B. Kraftstoff) die zweite Funktion, dass aus dieser Schicht und den nach aussen hin angeordneten Schichten Monomere, Oligomere und andere Substanzen nicht im Transportmedium in Lösung gehen (deshalb die Zusatzbezeichnung "Lösungsinhibitorschicht").

EP 0 428 833 B1 (Technoflow), die DE 40 01 125 C1 entspricht, beschreibt fünfschichtige Kraftfahrzeugrohrleitungen für alkoholhaltige Medien, bestehend aus einer Aussenschicht aus den Polymeren PA 11 oder PA 12, einer Zwischenschicht aus PA 6, einer Lösungsinhibitorzwischenschicht aus EVAL und einer Innenschicht aus PA 6. PA 6 und EVAL haften ohne Haftvermittler in direktem Kontakt zueinander. Als fünfte Schicht zwischen PA 6 und PA 12 enthält die beschriebene Leitung einen Haftvermittler auf Polyethylen- oder Polypropylenbasis mit aktiven Seitenketten. Gemäss EP 0 428 833 B1 haben die bevorzugten EVAL-Typen einen Ethylenanteil von 30 bis 45 %. Gemäss EP 0 428 833 B1 sind daher zwei Haftvermittlerschichten, bestehend aus Polyamid 6 bzw. Polyolefin notwendig, um das EVAL mit dem Polyamid 12 zu verbinden.

EP 0 428 834 A2 (Technoflow), die DE 40 01 126 C1 entspricht, beschreibt dreischichtige Kraftstoffleitungen mit Ethylen/Vinylalkohol-Copolymer (EVAL) als Innen-, PA 11 oder PA 12 als Aussenschicht. Als Haftvermittler zwischen EVAL und Polyamid 11 oder 12 wird Polyethylen oder Polypropylen mit aktiven Seitenketten vorgeschlagen.

DE-OS 35 10 395 (Technoflow) beschreibt dreischichtige Kraftstoffleitungen mit Ethylen/Vinylalkohol-Copolymer (EVAL) als Alkoholbarriere. DE-OS 35 10 395 sieht bereits die Notwendigkeit, EVAL vor Feuchtigkeitsaufhahme zu schützen. Als Lösung für diese Zwecke wird Polyamid und im speziellen PA 11 und PA 12 als Wassersperrschicht vorgeschlagen. Zwischen EVAL und PA 11 oder PA 12 ist gemäss DE-OS 35 10 395 kein Haftvermittler vorgesehen. Damit wird aber in der Praxis keine genügende Haftung zwischen den Schichten erreicht. Als Folge delaminieren die Schichten des Rohres und es verliert dadurch seine mechanischen Eigenschaften.

Die Firma Kuraray Co., Ltd. beschreibt in der Produktbroschüre: "KURARAY EVAL RESIN", Okt. 92, dass eine gute Haftung zwischen EVAL und "Nylon" ohne Haftvermittler angeblich möglich sei, hingegen bei Polyolefinen ein Haftvermittler notwendig sei. Sowohl Technoflow in DE-OS 35 10 395 als auch Kuraray gehen dabei auf die speziellen Haftungsprobleme zwischen EVOH und PA 12 nicht ein.

In JP 07-308996 werden Mehrschichtverbunde mit EVOH-Barriereschichten beschrieben, jedoch mit dem Hinweis, dass diese den Nachteil haben, dass durch Spannungsrisse im EVOH die Barrierewirkung abnimmt. Dieser Nachteil kann gemäss JP 07-308996 dadurch überwunden werden, dass man dem EVOH eine gewisse Menge Copolyamid 6/12 zumischt. Bei weniger als 10 Gew.-% Copolyamid 6/12 in der Mischung wird jedoch die Spannungsrissbeständigkeit ungenügend, während bei mehr als 50 Gew.-% Copolyamid 6/12 die Barriereeigenschaften schlechter werden. Gemäss JP 07-308996 werden auch Mehrschichtverbunde mit zwei bis sieben Schichten beschrieben. Zu den weiteren thermoplastischen Schichten wird erläutert, dass diese unter anderem auch aus Polyamid oder Polyester aber auch aus Mischungen von Polyamid 6 mit Polyolefinen bestehen können. Weiterhin wird in JP 07-308996 ausgeführt, dass im Copolyamid 6/12 ein Copolymerisationsverhältnis von Caprolactam zu Laurinlactam in einem Bereich von 85:15 bis 55:45 bevorzugt wird.

In EP 0 731 308 B1 (ELF ATOCHEM) werden Mehrschicht-Kraftfahrzeugrohrleitungen beschrieben mit einer Innenschicht aus einem modifiziertem Polyamid, in welchem ein Polyolefin als Schlagzähmodifikator dispergiert ist. Die Polyamidmatrix aus Polyamid 6 macht den Hauptbestandteil (65 Teile) aus. Darin ist ein Copolymer aus Ethylen/Buten sowie ein Copolymer aus Ethylen/Ethylacrylat/Maleinsäureanhydrid dispergiert. Die Aussenschicht der Rohrleitung besteht aus Polyamid 12; eine EVOH-Schicht ist zwischen der inneren und äusseren Schicht und einer weiteren Haftvermittlerschicht angeordnet.

EP 0 617 219 A2 (Technoflow) beschreibt mehrschichtige, durch Coextrusion hergestellte Kraftfahrzeugrohrleitungen, die als Sperrschichtkunststoffe EVOH, Polyamid und/oder PBT enthalten. Gemäss EP 0 617 219 muss aber mit mindestens zwei dünnen Sperrschicht/Laminatfilmen gearbeitet werden, die vom Material her gleich oder unterschiedlich sein können, und diese Sperrschichtfilme werden durch Haftvermittlerfilme in Verbund gebracht. Durch diesen Mehrschichtaufbau des Laminates ist es möglich, dass auch bei spröden Sperrkunststoffen erhebliche Biegeverformungen eines derartigen Rohres möglich sind, insbesondere wenn die Haftvermittlerfilme schubspannungsausgleichend eingerichtet sind.

US 5,469,892 (ITT) beschreibt Kraftstoffleitungen mit mindestens drei Schichten und einem gewellten Bereich, d. h. gewellten Wandungen. Die Kraftstoffleitungen können bis zu maximal fünf Schichten aufweisen. Als bevorzugtes Material für die Aussenschicht wird Polyamid 12 genannt; Polyamid 6 wird als bevorzugtes Material für die Innenschicht aufgeführt, welches überdies elektrisch leitfähig ausgerüstet sein kann. Das Mehrschichtrohr gemäss US 5,469,892 kann auch Zwischenschichten enthalten, die nicht aus Polyamid bestehen und Barriereeigenschaften gegenüber Kohlenwasserstoffen aus dem Kraftstoff aufweisen. Als Barriereschicht wird eine PBT- und/oder EVOH-Schicht erwähnt.

US 5,460,771 (ITT), die EP 0 743 894 B1 bzw. DE 695 14 645 T2 entspricht, beschreibt ein Verfahren zur Wellrohrherstellung von drei- oder mehrschichtigen gewellten Rohren für den Kraftstofftransport. Als Material für die Innenschicht werden neben Fluorpolymeren auch verschiedene Polyamide (PA 6, PA 11, PA 12) aufgeführt, während die Aussenschicht aus Polyamid 12 oder Polyamid 11 bestehen kann. Alternativ zu Fluorpolymer-Barriereschichten können dazwischen liegende Barriereschichten aus EVOH bestehen. Zum Problem der mangelnden Haftung zwischen EVOH und PA 12 bzw. PA 11 werden aber keine Vorschläge gemacht.

EP 428 833 A2 beschreibt eine durch Koextrusion hergestellte fünfschichtige KunststoffKraftstoffleitung, die eine Polyamid 11 oder 12-Außenschicht, eine Polyamid 6-Zwischenschicht, eine Lösungsinhibitorschicht aus einem Copolymer aus EVOH und eine Polyamid 6-Innenschicht umfasst, wobei sich zwischen der Außenschicht und der Zwischenschicht eine Haftvermittlerschicht aus Polyethylen oder Polypropylen befindet. Die Haftvermittlerschicht enthält aktive Seitenketten aus Maleinsäureanhydrid.

EP 445 706 A2 beschreibt durch Koextrusion hergestellte Kraftstoffleitungen, die eine Innen- und Außenschicht aus schlagzähmodifiziertem Polyamid (Polyamid 6 bzw. 12) und eine Sperrschicht schlagzähmodifikatorfreiem Homopolyamid, Copolyamid oder deren Blends enthält.

US 4 407 873 beschreibt ein Verpackungsmaterial, das aus einer Innenschicht aus Polyethylen niedriger Dichte, einer zweiten Schicht aus Polyethylen niedriger Dichte wahlweise mit Polyethylen mittlerer Dichte gemischt, eine dritte Schicht aus einem mit Polyethylen mittlerer Dichte-modifiziertem Anhydrid, einer vierten Schicht aus Nylon, einer fünften Schicht aus EVOH und einer sechsten Schicht aus Nylon besteht. Wahlweise befindet sich zwischen der zweiten und dritten Schicht eine Schicht eines Gemischs aus Polyethylen niedriger Dichte und Polyethylen mittlerer Dichte.

US 5 706 865 beschreibt eine Rohrleitung mit einem vielschichtigem Innenkern, der eine Außenschicht aus Polyamid und EVOH enthält, mit einer Außenverstärkung, die eine faserförmige Verstärkungsstruktur, eine Abdeckaußenschicht und Haftvermittler umfasst, wobei die Haftvermittler den Kern mit der Außenverstärkung verbinden und aus Polyurethan, Polyamid-Schmelzklebestoffen oder Polyester ausgewählt werden.

EP 0 246 102 A2 beschreibt ein thermoplastisches Laminat, das als Nahrungsmittelbehälter geeignet ist und ein erstes Substrat, das eine EVOH-Copolymer- und eine Polyamid-Schicht enthält, und ein zweites Substrat umfasst, das ein Vinylidenchlorid-Copolymer enthält. Außerdem kann sich ein drittes substrat zwischen den beiden vorstehenden befinden, das eine Polyamid-Schicht umfasst.

EP 1 036 968 A1 (Atofina) beschreibt Mehrschichtpolymerleitungen auf Basis von Polyamiden und weist in einer bevorzugten Ausführungsform eine Schichtenfolge (von innen nach außen) auf mit einer ersten Schicht aus einer Mischung aus Polyamid und einem Polyolefin oder auch aus einer Schicht aus Polyamid, einer EVOH-Schicht als Barriereschicht, einer Schicht aus einem Copolyamid als Haftvermittler und einer Schicht aus einem Polyamid, das insbesondere Polyamid 11 oder Polyamid 12 sein kann. Die in EP 1 036 968 A1 beschriebenen Haftvermittler sind Copolyamid 6/12 mit 20 bis 80 Ges.- % Polyamid 6 Anteil sowie Polyamid 612 und Polyamid 610.

EP 1 216 826 A2, welches nur unter Artikel 54(3) EPÜ relevant ist, beschreibt einen Mehrschichtverbund, der zwei Schichten enthält, nämlich eine Schicht aus einer Formmasse, die ein Ethylen/Vinylalkohol-Copolymer enthält, und eine Schicht die 0 bis 80 Gew.-Teile eines Polyamids enthält, wobei das Polyamid ausgewählt sein kann aus einer Komponente a) PA 11, PA 12, PA 612, PA 1012 und/oder PA 1212 oder aus einer Komponente c) PA 6, PA 66 und/oder PA6/66 sowie ein Blend aus den beiden Komponenten a) und c) sein kann, wobei gegebenenfalls ein Verträglichkeitsvermittler enthalten ist, beispielsweise in Form eines Polyamin-Polyamid-Copolymers.

EP 1 243 831 A1 offenbart einen Mehrschichtschlauch, der eine Außenschicht aus einem Polyamid 11 oder 12, eine Schicht aus einem Copolyamid 6/12, eine Schicht aus einem Ethylen/Vinylalkohol, eine Schicht aus einem Copolyamid 6/12 und eine Innenschicht aus einem Polyamid 11 oder 12 umfasst, wobei die Schichten direkt aufeinander folgen und in ihren Kontaktbereichen aufeinander haften.

In der KFZ-Industrie werden zur Erreichung rationeller Montageabläufe vorgeformte Kraftstoffleitungen eingesetzt. Zu diesem Zweck werden die Kunststoffrohre thermogeformt, d. h. unter Wärmeeinwirkung bleibend verformt. Bevorzugt wird dieser Prozess mit Heißluft, Öl, Infrarot oder Wasserdampf durchgeführt. Eine hohe Wirtschaftlichkeit wird mit Dampf mit Temperaturen im Bereich von 140° C bis 160° C erreicht. Diese hohe thermische Belastung erfordert aber eine optimale Haftungsfestigkeit und Temperaturbeständigkeit der verwendeten Rohrmaterialien.

Es ist daher Aufgabe der vorliegenden Erfindung, einen preiswerten thermoplastischen Mehrschichtverbund, das heißt insbesondere eine Mehrschichtkraftstoffleitung mit Barrierewirkung für die Automobilindustrie, ohne den Einsatz von Fluorpolymeren bereitzustellen, wobei eine einfache Herstellung und Weiterverarbeitung ermöglicht wird. Insbesondere soll auch bei einer hohen thermischen Belastung, wie es z. B. beim Thermoformen der Fall ist, eine optimale Haftfestigkeit und Temperaturbeständigkeit der verwendeten Rohrmaterialien gegeben sein.

Die obige Aufgabe wird durch den thermoplastischen Mehrschichtverbund gemäss den Merkmalen von Anspruch 1 sowie durch das Verfahren gemäss Anspruch 11 gelöst.

In den Unteransprüchen sind vorteilhafte Ausführungsformen der Erfindung enthalten.

Die Erfinder haben überraschenderweise festgestellt, dass Polyamide aus der Gruppe aus einer Mischung aus Polyamid 6 und Polyamid 12 mit Verträglichkeitsvermittler, einer Mischung aus Polyamid 6 und Polyamid 11 mit Verträglichkeitsvermittler, gleichzeitig eine gute, beständige und dauerhafte Haftung sowohl zu EVOH als auch zu Polyamid 12 oder Polyamid 11 sicherstellen, wobei der Verträglichkeitsvermittler bei den Polyamidmischungen ein zur Verbesserung der Zähigkeit von Polyamiden eingesetztes schlagzähmodifizierendes Polymer ist.

Die vorliegende Erfindung betrifft daher thermoplastische Mehrschichtverbunde, enthaltend mindestens eine Zwischenschicht aus einer Formmasse auf Basis von Ethylen/Vinylalkohol-Copolymeren zwischen Schichten aus Formmassen auf Basis von Polyamid, sowie mindestens auf einer Seite der Zwischenschicht eine Nebenschicht aus einer Formmasse auf Basis von Polyamid 12, Polyamid 11, Polyamid 1010, Polyamid 1012 oder Polyamid 1212, wobei zwischen der mindestens einen Nebenschicht und der Zwischenschicht eine haftvermittelnde Schicht aus einer Formmasse auf Basis von Polyamid, ausgewählt aus der Gruppe, bestehend aus einer Mischung aus Polyamid 6, Polyamid 12 und einem Verträglichkeitsvermittler, einer Mischung aus Polyamid 6, Polyamid 11 und einem Verträglichkeitsvermittler, angeordnet ist, und wobei die Menge an Polyamid in der haftvermittelten Schicht wenigstens 60 Gew.-% beträgt und wobei der Verträglichkeitsvermittler ein zur Verbesserung der Zähigkeit von Polyamiden eingesetztes schlagzähmodifizierendes Polymer ist.

Erfindungsgemäße Mehrschichtverbunde enthalten mindestens eine Zwischenschicht aus einer Formmasse auf Basis von Ethylen/Vinylalkohol-Copolymeren zwischen Schichten aus Formmassen auf Basis von Polyamid (wobei unter dem Begriff Polyamid Homopolyamide, Copolyamide und Mischungen aus Homopolyamiden und/oder Copolyamiden verstanden werden), wobei die Zwischenschicht auf mindestens einer Seite über eine haftvermittelnde Schicht aus einer Formmasse auf Basis der im vorangegangenen Absatz aufgeführten Polyamide, insbesondere auf Basis von Polyamid 6, mit mindestens einer Schicht aus einer Formmasse auf Basis von Polyamid 12 oder Polyamid 11 verbunden ist. Neben Polyamid 12 oder Polyamid 11 können in letzterer Schicht auch Polyamid 1010, Polyamid 1012 oder Polyamid 1212 verwendet werden, die gegenüber EVOH auch eine ungenügende Haftung aufweisen.

Die erfindungsgemäßen Mehrschichtverbunde können die Form eines Mehrschichtschlauchs, eines Mehrschichtrohrs oder eines Mehrschichtbehälters aufweisen.

In Bezug auf die EVOH-Zwischenschicht kann der Schichtenaufbau auf den beiden Seiten unterschiedlich oder gleich sein.

Bei Verwendung einer der erwähnten Polyamid-Mischungen als haftvermittelnde Formmasse beträgt der Anteil an Polyamid 6 bevorzugt zwischen 25 und 80 Gewichtsteile, bezogen auf 100 Gewichtsteile beider Polyamide zusammen.

In einer besonderen Ausführungsform der Erfindung wurde, um beim Thermoformen Einschränkungen zu vermeiden, darauf geachtet, dass der Schmelzpunkt der haftvermittelnden Polyamide oberhalb 150°C liegt.

In einer bevorzugten Ausführungsform der Erfindung besteht der thermoplastische Mehrschichtverbund aus einer inneren Schicht (a) aus einer Formmasse auf Basis von Polyamid 6, Polyamid 46, Polyamid 66, Polyamid 69, Polyamid 610 oder Polyamid 612, welche direkt an EVOH haften, gefolgt von einer Schicht (b) aus einer Formmasse auf Basis von Ethylen/Vinylalkohol-Copolymeren, einer Haftvermittlerschicht (c) aus einer Formmasse auf Basis der genannten haftvermittelnden Polyamide, und einer Außenschicht (d) aus einer Formmasse auf Basis von Polyamid 12 oder Polyamid 11 (vgl. Anspruch 8).

In einer besonders bevorzugten Ausführungsform der Erfindung wird die Innenschicht (a) mit Antistatika wie Russ, Karbonfasern, Graphitfasern, Metallpulver oder -fasern etc. ausgestattet, so dass die Innenschicht elektrisch leitfähig wird. Zu diesem Zweck kann aber auch eine zusätzliche fünfte, dünne, durch Antistatika elektrisch leitfähig gemachte Innenschicht auf Basis der Polyamide von Schicht (a) vorgesehen werden. Eine solche zusätzliche innerste Schicht ist billiger als die dickere Schicht (a) antistatisch auszurüsten.

Auch im Rahmen von Anspruch 1 ist es selbstverständlich möglich, die Innenschicht des Mehrschichtverbunds, die nicht auf die vorgängig unter (a) genannten Polyamide beschränkt ist, antistatisch auszurüsten. So ist zum Beispiel auch ein sozusagen symmetrischer Aufbau mit 5 Schichten möglich, mit EVOH als Mittelschicht und PA 12 als Außen- und Innenschicht, jeweils mit einer erfindungsgemässen Haftvermittlerschicht dazwischen. Die Polyamid 12-Innenschicht kann dabei elektrisch leitfähig, insbesondere mit Karbonfasern oder Leitruß, ausgestattet sein.

Die Polyamid-Formmassen des erfindungsgemässen thermoplastischen Mehrschichtverbundes können weiterhin einen oder mehrere die Schlagzähigkeit verbessernde Kautschuke enthalten.

Solche Kautschuke, auch Schlagzähmodifikatoren genannt, sind unter anderem beschrieben in EP 0 654 505 A1, von Seite 4, Zeile 38, bis Seite 5, Zeile 58, und aufgrund dieser ausführlichen Aufzählung dem Fachmann bestens bekannt. Gemeinsam ist solchen Schlagzähmodifikatoren, dass sie einen elastomeren Anteil enthalten und mindestens eine funktionelle Gruppe aufweisen, die mit dem Polyamid reagieren kann, beispielsweise eine Carbonsäure- oder Carbonsäureanhydridgruppe.

Die Herstellung von Schlagzähmodifikatoren geschieht durch Aufpfropfen oder Copolymerisieren der Ausgangspolymeren mit geeigneten reaktiven Verbindungen wie Maleinsäureanhydrid, (Meth-)Acrylsäure oder Glycidyl(meth)acrylat. Oft kann man deshalb Schlagzähmodifikatoren als gepfropfte Copolyolefine umschreiben. Es können auch Mischungen verschiedener Schlagzähmodifikatoren eingesetzt werden.

Aus der Affinität der Schlagzähmodifikatoren mit Polyamiden aufgrund der funktionellen Gruppen folgt, dass in der erfindungsgemäßen haftvermittelnden Schicht im Falle von Polyamidmischungen gerade Schlagzähmodifikatoren gleichzeitig die Rolle des Verträglichkeitsvermittlers übernehmen können. Bevorzugt werden dabei erfindungsgemäss säuremodifizierte Ethylen/α-Olefin-Copolymere verwendet. Andere geeignete Verträglichkeitsvermittler für die erfindungsgemäße haftvermittelnde Schicht sind z.B. Block-Copolyamide wie Block-Copolyamid 6/12.

Der Anteil an Verträglichkeitsvermittler in den Mischungen beträgt bevorzugt bis zu 30 Gew.-%, besonders bevorzugt 5 bis 15 Gew.-%.

Neben den bereits erwähnten Antistatika für die Innenschicht bzw. eine zusätzliche innerste Schicht können die Polyamid-Formmassen auch einen Flammschutzzusatz sowie weitere Zusatzstoffe wie Pigmente, Oligo- und Polymere, Stabilisatoren und Verarbeitungshilfsmittel sowie Verstärkungsmittel (z.B. Glasfasern) enthalten. Der Anteil an Verstärkungsmitteln kann bis zu 50 Gew.-%, der der Flammschutzmittel bis zu 15 Gew.-% und der aller übrigen Zusatzstoffe insgesamt bis zu 5 Gew.-%, jeweils bezogen auf die gesamte Formmasse, betragen.

Als Variante zur Steigerung der Barriereeigenschaften können die Polyamid-Formmassen für die Schichten der erfindungsgemässen thermoplastischen Mehrschichtverbunde mit Schichtsilikaten gefüllt werden. Bei den resultierenden Schichten wird neben einem verbesserten Permeationsverhalten auch die Festigkeit, Wärmeformbeständigkeit und Steifigkeit verbessert, ohne dass sich Zähigkeit und Reissdehnung verschlechtern, wie das bei üblichen Füllstoffen wie Glasfasern oder Mineralien der Fall ist. Erfindungsgemäss kann daher mindestens eine der Schichten des Mehrschichtverbundes, bevorzugt aber auch die Formmasse für die Zwischenschicht auf Basis von Ethylen/Vinylalkohol-Copolymeren, in der Polymermatrix Schichtsilikate enthalten. Da Schichtsilikate sich gut quellen lassen und sich die in den Schichtebenen vorhandenen Kationen austauschen lassen, ist es möglich, den Einbau des Minerals in das Polyamid und/oder Ethylen/Vinylalkohol-Copolymer in nanofeiner Verteilung während der Polykondensation bzw. Polymerisation, bzw. während der Verseifung (Hydrolyse) von Ethylen/Vinylacetat-Copolymer durchzuführen.

Der Anteil an Schichtsilikaten in der Polymermatrix kann 0,5 bis 50 Gew.-Teile pro 100 Gew.-Teile der Polymermatrix betragen. Als Schichtsilikate kommen z.B. Tonminerale der Montmorillonit-Reihe, wie Montmorillonit, Hektorit, Nontronit, Saponit, Vermiculit, in Frage, da diese Tone eine grosse Basenaustauscherkapazität aufweisen. Die Herstellung von Polyamid-Schichtsilikat-Nanocomposites ist bereits seit den 70er Jahren bekannt. Beispielsweise wird hier auf die DE 36 32 865 C2 verwiesen.

Was die erwähnten Additive betrifft, so wird die Menge an Polyamid in der haftvermittelnden Schicht immer wenigstens 60 Gew.-%, bevorzugt wenigstens 70 Gew.-% und besonders bevorzugt wenigstens 80 Gew.-% sein.

Die Fertigung der erfindungsgemässen Mehrschichtverbunde kann ein- oder mehrstufig erfolgen. Bei einstufigen Verfahren erfolgt die Verarbeitung der Komponenten simultan, z.B. durch (Co-)Extrusion, (Mehrkomponenten-)Spritzgiessen oder Extrusionsblasformen. Beim einstufigen Extrusionsverfahren werden beispielsweise die verschiedenen Schmelzen coextrudiert. Bei einem mehrstufigen Verfahren wird zunächst mindestens eine Komponente durch thermoplastische Verarbeitung in die gewünschte Form gebracht und dann mit den übrigen Komponenten beaufschlagt, was durch Pressen, Spritzgiessen (z.B. Hinterspritzen), Extrudieren oder Extrusionsblasformen (z.B. sequentielles Extrusionsblasformen) geschehen kann.

Es können somit erfindungsgemäße Mehrschichtrohrleitungen im Coexverfahren (simultan) oder im Ummantelungsverfahren (zweistufig) hergestellt werden. Im Ummantelungsverfahren wird mindestens eine Schicht auf ein vorkalibriertes Rohr aus inneren Schichten aufgebracht.

Die erfindungsgemässen Mehrschichtverbunde finden als Konstruktionsteile vor allem im Bereich der Maschinenbau- und Automobilindustrie Verwendung. Insbesondere finden die erfindungsgemässen Mehrschichtverbunde Verwendung als Mehrschichtrohre, bevorzugt als Kraftstoffleitungen, wie z. B. Diesel- oder Benzinleitungen, bzw. als Tankeinfüllstutzen. Es sind unter Beachtung der Vorschriften für den Lebensmittelkontakt auch Anwendungen im Lebensmittelsektor denkbar, zum Beispiel Schläuche oder Rohre zum Transport von alkoholhaltigen Getränken. Der erfindungsgemässe Mehrschichtverbund kann auch die Form eines Hohlkörpers oder Behälters haben, um darin flüssige Medien aus den erwähnten Anwendungsbereichen zu lagern, z. B. in Form einer Flasche, eines Kanisters oder als Tank, zusammengefasst unter dem Begriff Mehrschichtbehälter.

Die erfindungsgemässen Mehrschichtverbunde, insbesondere die erfindungsgemässen Kraftfahrzeugrohrleitungen, bestehen vorzugsweise aus vier Schichten, bzw. aus fünf Schichten bei einer zusätzlichen antistatischen Innenschicht.

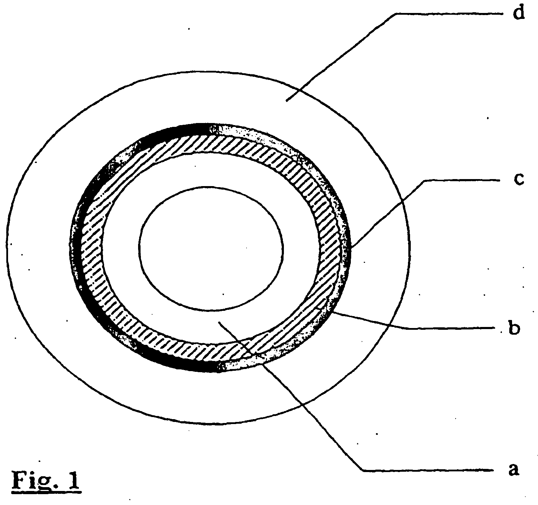

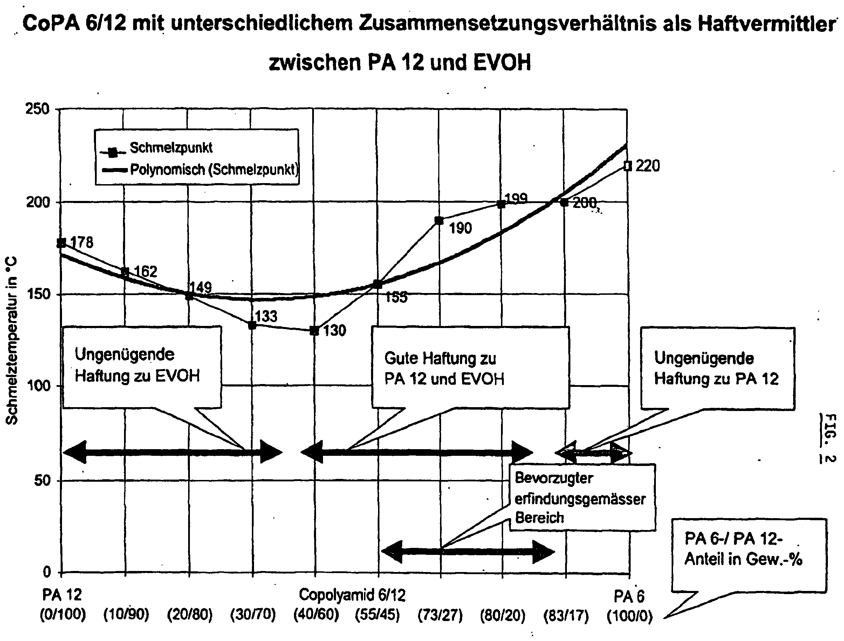

Figur 1 zeigt schematisch eine durch Coextrusion hergestellte, vierschichtige, erfindungsgemäße Kraftstoffleitung aus Kunststoff im Querschnitt. Dabei bedeuten die Bezugszeichen:
   a: Innenschicht
   b: Barriere- und Lösungsinhibitorschicht
   c: Haftvermittler-Zwischenschicht
   d: Außenschicht

Häufig haben Kraftstoffleitungen für Automobile eine Dimension von 8 x 1 mm, d. h. 8 mm Außendurchmesser und eine Wandstärke von 1 mm. Eine bevorzugte erfindungsgemäße Kraftstoffleitung ist nun beispielsweise wie folgt aufgebaut, ohne die Erfindung darauf zu beschränken:
a: Innenschicht aus einer Formmasse auf Basis von Polyamid 6; 0,2 bis 0,7 mm dick,
b: Barriere- und Lösungsinhibitorschicht aus einer Formmasse auf Basis von einem Ethylenvinylalkohol-Copolymer;
   0,1 bis 0,3 mm dick,
c: Haftvermittler- Zwischenschicht auf Basis einer Formmasse aus Polyamid. ausgewählt aus einer Mischung aus Polyamid 6 und Polyamid 12 mit Verträglichkeitsvermittler; 0,05 bis 0,2 mm dick,
d: Außenschicht aus einer Formmasse auf Basis von Polyamid 12; 0,2 bis 0,7 mm dick.

In der Praxis wird die Dicke der einzelnen Schichten häufig variiert. Dabei muss jedoch eine Gesamtwanddicke von etwa 1 mm (oder geringfügig mehr) beachtet werden.

Im folgenden werden die durchgeführten Versuche ausführlich erläutert und zunächst die dabei eingesetzten Materialien beschrieben, ohne jedoch die Erfindung auf die verwendeten Materialien zu beschränken.

### Verwendete Materialien

### a) für die Innenschicht:

- Grilon® BRZ 247 WCA: ein schlagzäh und weich gemachtes Polyamid 6 der Firma EMS-CHEMIE AG, Domat/Ems, Schweiz (geeignet ist auch der niedriger viskose Typ Grilon® BRZ 234 WCA);

### b) für die Barriere- und Inhibitorschicht:

- EVAL® EP-F 101A: Ethylen/Vinylalkohol-Copolymer, ein Produkt der Firma KURARAY;

### d) für die Aussenschicht:

- Grilamid® L 25 W 40 CA: ein schlagzäh und weich gemachtes Polyamid 12 der Firma EMS-CHEMIE AG, Domat/Ems, Schweiz (geeignet ist auch der Typ Grilamid® L 25 W 20 CA, der weniger Weichmacher enthält);

### c) für die Haftvermittler-Zwischenschicht:

- Grilon® C XE 3813: eine Mischung aus 45 Gew.-% Polyamid 6 und 45 Gew.-% Polyamid 12 und 10 Gew.-% eines säuremodifizierten Ethylen/α-Olefin-Copolymers als Verträglichkeitsvermittler, ein Produkt der Firma EMS-CHEMIE AG, Domat/Ems, Schweiz.

Durch Coextrusion wurden die verschiedenen Schichten in Verbund gebracht. Auf einer handelsüblichen Mehrschicht-Coextrusionsanlage wurden Rohre der Dimension 8 x 1 mm hergestellt, wobei das Material für die Haftvermittlerschicht (c) variiert wurde. Dabei wurden folgende Schichtdicken eingestellt:
- Innenschicht (a): 0,35 mm
- Schicht (b): 0,25 mm
- Schicht (c): 0,10 mm
- Aussenschicht (d): 0,30 mm

Die nachfolgende Tabelle 1 zeigt die Eignung der untersuchten Polyamidderivate als Haftvermittler zwischen Polyamid 12 (Grilamid® L 25 W 40 CA schwarz 9992) und EVOH (EVAL® EP-F 101A) und die qualitative Haftfestigkeit sowohl im Originalzustand als auch nach Dampfbehandlung.

Die Haftung wurde nach SAE-XJ2260 überprüft (visuelle Beurteilung nach mechanischer Deformation).

**Tabelle 1**

| | | | | **Haftung zu PA 12** | | **Haftung zu EVOH** | | |
|---|---|---|---|---|---|---|---|---|
| **Haftvermittler-Typ** | **Her-Steller** | **Zusammensetzung** | **Tm °C** | **Orig.** | **Dampf 4' bei 140°C** | **Orig.** | **Dampf 4' bei 140°C** | **Beurteilung** |
| Admer® QB 510 E | Mitsui | PP+MAH gepfropft | 160 | + | - | n. g. | n. g. | Haftung zu PA 12 ungenügend nach Dampflagerung |
| Grilon® C XE 3813 | EMS | PA 6/PA 12 + Vertr. v. | 222/ 178 | + | + | + | + | Haftung zu PA 12 und EVOH gut |

| | | | | | | | | |
|---|---|---|---|---|---|---|---|---|
| Legende: • n. g. = nicht geprüft • Tm = Schmelzpunkt | | | | | | | | |

Das erfindungsgemässe Mehrschichtrohr erfüllt die SAE J 2260 Anforderungen, wie in Versuchen der Erfinder gezeigt werden konnte. Es zeigt eine gute Extrudierbarkeit, und auch die Herstellung als Wellrohr ist möglich (so dass wenigstens Teilbereiche eine gewellte Wandung aufweisen). Hohe Schlagfestigkeit und Temperaturbeständigkeit können weiterhin dem erfindungsgemässen Mehrschichtrohr bescheinigt werden, da keine Haftvermittler auf Polyethylen- oder Polypropylenbasis verwendet werden. Weiterhin können standardisierte und erprobte Werkstoffe eingesetzt werden.

Speziell hervorzuheben ist der erfindungsgemäße Vorteil der ausgezeichneten Haftung, die auch beim Thermoformen mit Dampf nicht verloren geht. In dieser Hinsicht sind die Ausführungsformen mit den beschriebenen Polyamid-Mischungen als haftvermittelnde Formmassen besonders beständig.

Durch das Dampf-Thermoformen erreicht man zudem einen weiteren Vorteil: Die Mehrschichtrohre werden flexibler, wodurch sie leichter montiert werden können. Dieser Effekt ist zwar bereits von den ähnlich aufgebauten Mehrschichtfolien aus DE 198 06 468 A1 bekannt, in der aber kein Mehrschichtverbund mit Schichtenfolge gemäss vorliegender Erfindung offenbart ist.

Überraschend ist jedoch die Tatsache, dass an mit Dampf thermogeformten, erfindungsgemäßen Mehrschichtrohren keine Verschlechterung der Barriereeigenschaften (Permeation) gemessen wird, wenn das Dampf-Thermoformen unter üblichen Praxisbedingungen, d.h. nicht länger als 5 Minuten bei nicht mehr als 150°C, durchgeführt wird. Dies war aufgrund der Aussage zur Sperrwirkung von EVAL unter Wassereinfluss im eingangs zitierten Kunststoff-Taschenbuch (Saechtling) nicht zu erwarten.

Schließlich soll auch noch darauf hingewiesen werden, dass die bei der Würdigung des Standes der Technik erwähnten Probleme von EVOH, nämlich dessen Bruchempfindlichkeit und Spannungsrissanfälligkeit, bei der vorliegenden Erfindung nicht in Erscheinung traten. Dies liegt offenbar an der sehr guten Einbettung im erfindungsgemässen Mehrschichtverbund, d.h. an der ausgezeichneten Haftung zu beiden benachbarten Polyamidschichten, welche die EVOH-Schicht optimal abstützen.

## Patentansprüche

1. Thermoplastischer Mehrschichtverbund, enthaltend
- mindestens eine Zwischenschicht aus einer Formmasse auf Basis von Ethylen/Vinylalkohol-Copolymeren zwischen Schichten aus Formmassen auf Basis von Polyamid,
- sowie mindestens auf einer Seite der Zwischenschicht eine Nebenschicht aus einer Formmasse auf Basis von Polyamid 12, Polyamid 11, Polyamid 1010, Polyamid 1012 oder Polyamid 1212,
**dadurch gekennzeichnet, dass** zwischen der mindestens einen Nebenschicht und der Zwischenschicht eine haftvermittelnde Schicht aus einer Formmasse auf Basis von Polyamid, ausgewählt aus der Gruppe, bestehend aus einer Mischung aus Polyamid 6, Polyamid 12 und einem Verträglichkeitsvermittler, einer Mischung aus Polyamid 6, Polyamid 11 und einem Verträglichkeitsvermittler, angeordnet ist, wobei die Menge an Polyamid in der haftvermittelnden Schicht wenigstens 60 Gew.% beträgt, und wobei der Verträglichkeitsvermittler bei den Polyamid-Mischungen ein zur Verbesserung der Zähigkeit von Polyamiden eingesetztes schlagzähmodifizierendes Polymer ist.

2. Thermoplastischer Mehrschichtverbund gemäss Anspruch 1, **dadurch gekennzeichnet, dass** die Zwischenschicht aus Ethylen/Vinylalkohol-Copolymeren auf beiden Seiten über haftvermittelnde Schichten an Nebenschichten gebunden ist.

3. Thermoplastischer Mehrschichtverbund gemäss Anspruch 1 oder 2, **dadurch gekennzeichnet, dass** er ein Mehrschichtschlauch, ein Mehrschichtrohr, das gegebenenfalls wenigstens in Teilbereichen eine gewellte Wandung aufweist, oder ein Mehrschichtbehälter ist.

4. Thermoplastischer Mehrschichtverbund gemäss Anspruch 1, bei dem die Menge an Polyamid in der haftvermittelnden Schicht wenigstens 70 Gew.-% und bevorzugt wenigstens 80 Gew.% beträgt.

5. Thermoplastischer Mehrschichtverbund gemäss Ansprüchen 1 bis 3, **dadurch gekennzeichnet, dass** als Formmasse für die haftvermittelnde Schicht eine PolyamidMischung aus Polyamid 6, Polyamid 12 und einem Verträglichkeitsvermittler mit einem Polyamid 6-Anteil zwischen 25 und 80 Gew.-Teilen, bezogen auf 100 Gew.-Teile der beiden Polyamidbestandteile in der Mischung, oder eine Polyamidmischung aus Polyamid 6, Polyamid 11 und einem Verträglichkeitsvermittler mit einem Polyamid 6-Anteil von zwischen 25 und 80 Gew.-Teilen, bezogen auf 100 Gew.-Teile der beiden Polyamidbestandteile in der Mischung, verwendet wird.

6. Thermoplastischer Mehrschichtverbund gemäss Ansprüchen 1 bis 3 oder 5, **dadurch gekennzeichnet, dass** das schlagzähmodifizierende Polymer ein Schlagzähmodifikator, Elastomer oder Kautschuk ist, wobei säuremodifizierte Ethylen/α-Olefin-Copolymere bevorzugt sind, und der Verträglichkeitsvermittler insbesondere in Mengen von bis zu 30 Gew.-% in den Polyamid-Mischungen vorhanden ist.

7. Thermoplastischer Mehrschichtverbund gemäss einem der vorhergehenden Ansprüche 1 bis 6, **dadurch gekennzeichnet, dass** die Polymer-Formmassen für die einzelnen Schichten, insbesondere die Formmasse für die Ethylen/Vinylalkohol-Copolymerschicht, mit Schichtsilikaten in einer Menge von 0,5 bis 50 Gew.-Teilen pro 100 Gew.-Teilen der Polymermatrix gefüllt sind.

8. Thermoplastischer Mehrschichtverbund gemäss einem der vorhergehenden Ansprüche 1 bis 7, **gekennzeichnet durch**
(a) eine Innenschicht aus einer Formmasse auf Basis von Polyamid 6, Polyamid 46, Polyamid 66, Polyamid 69, Polyamid 610 oder Polyamid 612,
(b) eine Zwischenschicht aus einer Formmasse auf Basis von Ethylen/Vinylalkohol-Copolymeren,
(c) eine zwischen der Zwischenschicht (b) und der Außenschicht (d) angeordnete und an diese grenzende haftvermittelnde Schicht aus einer Formmasse auf Basis von Polyamid, ausgewählt aus der Gruppe aus einer Mischung aus Polyamid 6 und Polyamid 12 mit Verträglichkeitsvermittler, insbesondere mit einem Polyamid 6-Anteil von 25 bis 80 Gew.-Teilen, bezogen auf 100 Gew.-Teile der beiden Polyamidbestandteile in der Mischung, einer Mischung aus Polyamid 6 und Polyamid 11 mit Verträglichkeitsvermittler, insbesondere mit einem Polyamid 6-Anteil von 25 bis 80 Gew.-Teilen, bezogen auf 100 Gew.-Teile der beiden Polyamidbestandteile in der Mischung, wobei der Verträglichkeitsvermittler bei den Polyamid-Mischungen ein zur Verbesserung der Zähigkeit von Polyamiden eingesetztes schlagzähmodifizierendes Polymer ist und
(d) eine Aussenschicht aus einer Formmasse auf Basis von Polyamid 12 oder Polyamid 11.

9. Thermoplastischer Mehrschichtverbund gemäss Anspruch 8, **dadurch gekennzeichnet, dass** die Innenschicht (a) oder eine zusätzliche innerste Schicht auf der Basis der Polyamide von Schicht (a) Zusätze enthält, die sie elektrisch leitfähig machen, wobei Karbonfasern und/oder Leitruß bevorzugt sind.

10. Thermoplastischer Mehrschichtverbund gemäss einem der Ansprüche 3 bis 9, **dadurch gekennzeichnet, dass** das Mehrschichtrohr eine Kraftstoffleitung ist.

11. Verfahren zur Herstellung eines thermoplastischen Mehrschichtverbundes in einer oder mehreren Stufen gemäss den Ansprüchen 1 bis 10 durch Spritzgiessen, Coextrusion, Extrusionsblasformen, Pressen, oder im Ummantelungsverfahren.

## Claims

1. Thermoplastic multilayer composite containing
- at least one intermediate layer of a moulding compound on the basis of ethylene/vinyl alcohol copolymers, between layers of a moulding compounds on the basis of polyamide,
- as well as an ancillary layer of a moulding compound on the basis of polyamide 12, polyamide 11, polyamide 1010, polyamide 1012, or polyamide 1212, at least on one side of the intermediate layer,
**characterised in that** between the at least one ancillary layer and the intermediate layer, there is arranged an adhesion-promoting layer which is of a moulding compound on the basis of polyamide selected from the group consisting of a mixture of polyamide 6, polyamide 12, and a compatibiliser, a mixture of polyamide 6, polyamide 11, and a compatibiliser, wherein the amount of polyamide in said adhesion-promoting layer is at least 60 % by weight and wherein the compatibiliser in the polyamide mixtures is an impact-strength-modified polymer used to improve the toughness of polyamides.

2. Thermoplastic multilayer composite according to claim 1, **characterised in that** the intermediate layer of ethylene/vinyl alcohol copolymers is bonded to ancillary layers on both sides via adhesion-promoting layers.

3. Thermoplastic multilayer composite according to claim 1 or 2, **characterised in that** it is a multilayer hose, a multilayer pipe which optionally, at least in subsections, has a corrugated wall, or a multilayer container.

4. Thermoplastic multilayer composite according to claim 1, in which the amount of polyamide in the adhesion-promoting layer is at least 70 % by weight and preferably at least 80 % by weight.

5. Thermoplastic multilayer composite according to one of claims 1 to 3, **characterised in that** a polyamide mixture of polyamide 6, polyamide 12, and a compatibiliser with a polyamide 6 fraction between 25 and 80 parts by weight, referred to 100 parts by weight of the two polyamide components in the mixture, or a polyamide mixture of polyamide 6, polyamide 11, and a compatibiliser with a polyamide 6 fraction between 25 and 80 parts by weight, referred to 100 parts by weight of the two polyamide components in the mixture, is used as a moulding compound for the adhesion-promoting layer.

6. Thermoplastic multilayer composite according to one of claims 1 to 3 or 5, **characterised in that** the impact-strength modified polymer is an impact strength modifier, elastomer, or rubber, wherein acid-modified ethylene/α-olefin copolymers are preferred, and that the compatibiliser in the polyamide mixtures is present particularly in amounts of up to 30 % by weight.

7. Thermoplastic multilayer composite according to one of the preceding claims 1 to 6, **characterised in that** the polymer moulding compounds for the individual layers, and particularly the moulding compound for the ethylene/vinyl alcohol copolymer layer, are filled with layer silicates in an amount of 0.5 to 50 parts by weight per 100 parts by weight of the polymer matrix.

8. Thermoplastic multilayer composite according to one of the preceding claims 1 to 7, **characterised by**
(a) an inner layer of a moulding compound on the basis of polyamide 6, polyamide 46, polyamide 66, polyamide 69, polyamide 610, or polyamide 612,
(b) an intermediate layer of a moulding compound on the basis of ethylene/vinyl alcohol copolymers,
(c) an adhesion-promoting layer disposed between said intermediate layer (b) and said outer layer (d) and adjoining them, of a moulding compound on the basis of polyamide selected from the group of a mixture of polyamide 6 and polyamide 12 with compatibiliser, particularly with a polyamide 6 fraction of 25 to 80 parts by weight referred to 100 parts by weight of the two polyamide components in the mixture, a mixture of polyamide 6 and polyamide 11 with compatibiliser,
particularly with a polyamide 6 fraction of 25 to 80 parts by weight, referred to 100 parts by weight of the two polyamide components in the mixture, wherein the compatibiliser in the polyamide mixtures is an impact-strength modified polymer used to improve the toughness of polyamides, and
(d) an outer layer of a moulding compound on the basis of polyamide 12 or polyamide 11.

9. Thermoplastic multilayer composite according to claim 8, **characterised in that** the inner layer (a) or an additional, innermost layer on the basis of the polyamides of layer (a) contains additives making it electrically conductive, wherein carbon fibres and/or conducting carbon black are preferred.

10. Thermoplastic multilayer composite according to one of the claims 3 to 9, **characterised in that** the multilayer pipe is a fuel line.

11. Method for producing a thermoplastic multilayer composite in one or several steps according to claims 1 to 10 by injection moulding, coextrusion, extrusion blow moulding, pressing, or by the casing process.

## Revendications

1. Composite stratifié thermoplastique, contenant :
- au moins une couche intermédiaire formée à partir d'une masse de moulage sur la base d'éthylène / de copolymères d'alcool vinylique entre des couches de masse de moulage sur la base de polyamide,
- ainsi qu'au moins une couche annexe, sur un côté de la couche intermédiaire, formée à partir d'une masse de moulage sur la base de polyamide 12, de polyamide 11, de polyamide 1010, de polyamide 1012 ou de polyamide 1212,
**caractérisé en ce qu'**une couche médiatrice d'adhésion formée à partir d'une masse de moulage sur la base de polyamide - choisie parmi le groupe constitué d'un mélange de polyamide 6, de polyamide 12 et d'un médiateur de compatibilité, d'un mélange de polyamide 6, de polyamide 11 et d'un médiateur de compatibilité - est agencée entre ladite au moins une couche annexe et la couche intermédiaire, la quantité de polyamide dans la couche médiatrice d'adhésion comportant au moins 60% en poids et le médiateur de compatibilité pour les mélanges de polyamide étant un polymère qui est utilisé pour améliorer la ténacité des polyamides et qui modifie la résilience.

2. Composite stratifié thermoplastique selon la revendication 1, **caractérisé en ce que** la couche intermédiaire en éthylène / copolymères d'alcool vinylique est liée aux couches annexes sur les deux côtés via des couches médiatrices d'adhésion.

3. Composite stratifié thermoplastique selon la revendication 1 ou 2, **caractérisé en ce qu'**il présente un tuyau flexible stratifié, un tube stratifié ou le cas échéant au moins une paroi ondulée dans des régions partielles, ou **en ce qu'**il est un récipient stratifié.

4. Composite stratifié thermoplastique selon la revendication 1, dans lequel la quantité de polyamide dans la couche médiatrice d'adhésion est d'au moins 70% en poids et de préférence au moins 80% en poids.

5. Composite stratifié thermoplastique selon les revendications 1 à 3, **caractérisé en ce qu'**on utilise comme masse de moulage pour la couche médiatrice d'adhésion, un mélange de polyamide constitué de polyamide 6, de polyamide 12 et d'un médiateur de compatibilité avec une teneur de polyamide 6 entre 25 et 80 parts pondérales, en référence à 100 parts pondérales des deux composants de polyamide dans le mélange, ou un mélange de polyamide constitué de polyamide 6, de polyamide 11 et d'un médiateur de compatibilité avec une teneur de polyamide 6 entre 25 et 80 parts pondérales, en référence à 100 parts pondérales des deux composants de polyamide dans le mélange.

6. Composite stratifié thermoplastique selon les revendications 1 à 3 ou 5, **caractérisé en ce que** le polymère qui modifie la résilience est un modificateur de résilience, un élastomère ou un caoutchouc, la préférence étant accordée à l'éthylène modifié à l'acide/des copolymères à l'oléfine α, et **en ce que** le médiateur de compatibilité est présent en particulier dans des quantités atteignant jusqu'à 30% en poids dans les mélanges de polyamide.

7. Composite stratifié thermoplastique selon l'une des revendications précédentes 1 à 6, **caractérisé en ce que** les masses de moulage en polymère pour les couches individuelles, en particulier la masse de moulage pour la couche d'éthylène/de copolymères d'alcool vinylique, sont remplies de silicates stratifiés dans une quantité de 0,5 à 50 parts pondérales pour 100 parts pondérales de la matrice de polymère.

8. Composite stratifié thermoplastique selon l'une des revendications précédentes 1 à 7, **caractérisé par** :
(a) une couche intérieure formée à partir d'une masse de moulage sur la base de polyamide 6, de polyamide 46, de polyamide 66, de polyamide 69, de polyamide 610 ou de polyamide 612 ;
(b) une couche intermédiaire formée à partir d'une masse de moulage sur la base d'éthylène / de copolymères d'alcool vinylique ;
(c) une couche médiatrice d'adhésion agencée entre la couche intermédiaire (b) et la couche extérieure (d) et venant limiter celles-ci, formée à partir d'une masse de moulage sur la base de polyamide - choisie parmi le groupe constitué d'un mélange de polyamide 6, de polyamide 12 avec un médiateur de compatibilité, en particulier avec une teneur en polyamide 6 de 25 à 80 parts pondérales, en référence à 100 parts pondérales des deux composants de polyamide dans le mélange, d'un mélange de polyamide 6, de polyamide 11 avec un médiateur de compatibilité, en particulier avec une teneur en polyamide 6 de 25 à 80 parts pondérales, en référence à 100 parts pondérales des deux composants de polyamide dans le mélange, le médiateur de compatibilité pour les mélanges de polyamide, étant un polymère qui est utilisé pour améliorer la ténacité des polyamides et qui modifie la résilience ; et
(d) une couche extérieure formée à partir d'une masse de moulage sur la base de polyamide 12 ou de polyamide 11.

9. Composite stratifié thermoplastique selon la revendication 8, **caractérisé en ce que** la couche intérieure (a) ou une couche supplémentaire la plus en profondeur sur la base des polyamide de la couche (a) contient des additifs qui la rendent électriquement conductible, la préférence étant accordée aux fibres de carbone et/ou à la suie de conduction.

10. Composite stratifié thermoplastique selon l'une des revendications 3 à 9, **caractérisé en ce que** le tube stratifié est une conduite de carburant.

11. Procédé pour fabriquer un composite stratifié thermoplastique en une ou plusieurs étapes selon les revendications 1 à 10, par moulage par injection, coextrusion, moulage par soufflage à extrusion, pressage ou dans un procédé d'enrobage.
